# EUROPEAN PATENT APPLICATION

(11) **EP 2 390 075 A1**
(43) Date of publication of application: **30.11.2011**
(21) Application number: 10164474.8
(22) Date of filing: 31.05.2010
(51) Int. Cl.: B29C 45/00, B60B 5/02

(54) **Method and molding equipment for making a plastic wheel, and wheel thus obtained**

(71) Applicant: Electrolux Home Products Corporation N.V., 1130 Brussels (BE)
(72) Inventor: Georgescu, Mihail, I-33170 Pordenone (IT); Bortolotti, Paolo, I-33170 Pordenone (IT)
(74) Representative: Maccalli, Marco

(57) **Abstract**

A method of making a plastic wheel **(105)** having a plurality of spokes **(155),** the method comprising injecting melted plastic material into a mold, characterized in that the melted plastic material is injected into the mold in regions corresponding to every spoke of the wheel to be formed. A molding equipment is also disclosed.

## Description

### Background of the invention

### Field of the invention

The present invention relates to the field of the manufacturing of plastics components or parts, particularly but not limitatively for household appliances.

Specifically, the present invention relates to a method of making a plastic wheel, particularly although not limitatively a plastic pulley for, *e.g*., a belt transmission, for example for household appliances like laundry washing machines, washing/drying machines, dryers. The present invention also relates to a molding equipment for actuating the method and to a plastic wheel thus obtained.

### Overview of the related art

Pulleys for belt transmissions for the rotary motion of drums of laundry washing machines, washing/drying machines, dryers are usually made of aluminum or of plastic material. In particular, the pulleys made of plastic material are formed by injection of melted thermoplastic polymeric resin into a mold through one or more injection nozzles.

The melted thermoplastic polymeric resin is usually reinforced with reinforcing fibers, for example natural fibers as hemp and flax, polycrystalline fibers, glass, carbon, aluminium, boron, titanium, polyester or aramid fibers or filaments; the reinforcing fibers enhance the stiffness and the stability of the pulley.

Typically, the injection nozzles are located in the central region of the mold, which corresponds to the region around the hub of the pulley.

US 4,511,184 teaches that a unitary wheel is injection molded from glass-fiber-reinforced thermoplastic material in such a manner that the melt streams of material meet and coalesce in the spokes of the wheel. Coalescence of the melt streams in the spokes of the wheel is accomplished by introducing the streams into certain of the spokes while separating those spokes from each other by an odd number of intermediary spokes to which no material is directly injected.

US 4,497,766 discloses a method and a mold for the manufacture of a wheel construction of plastic material for vehicles or the like, which comprises a number of spokes, a hub and a rim together constituting an integrated unit. The plastic material is injected in a mold, the cavity of which exhibits a form corresponding to the one of the desired wheel construction, the design of the wheel being chosen to comprise an even number of spokes. The inlets are located at such points near to every second one of the spoke portions forming part of said mold, so that the zones, where the flows of material join each other, will be located near to points, where the spoke portions, free from inlets, blend into the rim.

In JP 62148219, for the alleged purpose of averaging the orientation of a molding material and to improve the accuracy of shape dimension by setting more than one theft parts and ribs on a molded gear and more than one gates between ribs at every two intervals, theft convex parts and more than one ribs are radially set at a specified interval on both sides between a fixed tube of the center and a ring part having mating gears on its outer circumference. More than one gates are set at every two intervals between ribs set on the theft parts. When a molding material filled with additives such as glass and carbon fiber is packed in the cavity of a mold in molding of a gear, the flow of molten material is thereby branched and controlled to average the orientation.

### Summary of the invention

The Applicant has observed that the injection of the melted thermoplastic polymeric resin into the central, hub region of the mold is disadvantageous, because the melted material has to flow along a relatively long and tortuous path in order to fill the whole mold. The resulting inhomogeneous distribution of the metlted thermoplastic polymeric resin through the mold may cause the manufactured component to be scarcely planar.

The Applicant has observed that also the solution disclosed in US 4,511,184, providing for injecting the melt plastic streams only into certain of the spokes of the wheel exhibits some drawbacks. During the injection, the melted plastic streams have to run through a winding, tortuous path with several curves for reaching the mold cavities of the spokes where no injection nozzles are present; this, in addition to causing the produced wheel to be scarcely planar as mentioned above, can jeopardize the achievement of a proper radial disposition of the glass fibers in the spokes, with a consequent reduction of the mechanical strength of the wheel. The points where two or more melt plastic streams coming from mold cavities provided with injection nozzles meet, which points corresponding to weak regions of the wheel, may happen to be in one of the mold cavities of the spokes where no injection nozzle is provided; as a consequence, the weak regions of the wheel are located in the spokes, which instead are the wheel regions more subject to flexure stress.

Similar drawbacks affects the method disclosed in US 4,497,766.

The above mentioned drawbacks essentially prevent the use of long reinforcing fibers (for example long glass fibers) for reinforcing the plastic material. For the purposes of the present invention, by "long reinforcing fiber" it is intended a reinforcing fiber (for example glass fibre) having length comparable or equal to the size of the pellets (*i.e*., grains) of polymeric resin that is melted and injected into the mold; a long reinforcing fiber may have a length of the order of 1 cm or less, for example of 10 - 25 mm. By "short reinforcing fiber" (for example short glass fiber) it is instead meant reinforcing fibers having length shorter that the size of the polymeric resin grain, for example of the order of 0.1 - 2 mm.

The Applicant has observed that the use of long reinforcing fibers (for example long glass fiber) for reinforcing the thermoplastic polymer resin allows combining high performance/price ratios, such as reduced weight, good design and styling flexibility, with rapid clean processability of the molding equipment. Long reinforcing fibers would thus be a promising substitute of short reinforcing fibers in the manufacturing of wheel structures, like pulleys.

The Applicant has however observed that in order to use long reinforcing fibers (e.g. long glass fibers) for reinforcing the plastic material, the path of the injected melted plastic stream should be as short as possible, so as to ensure a proper orientation of the reinforcing fibers; the lesser the number of injection nozzles, the longer the path of the melted plastic stream, and the higher the likelihood that the reinforcing fibers are not well distributed, and that the manufactured product is not sufficiently planar.

The Applicant has found that by providing injection nozzles for the melt plastic in all the mould cavities of the spokes, the path of the melt plastic streams is suitably kept short, and the distribution of the reinforcing fibers, even if long, is good; additionally, the melt plastic injection pressure can be kept low.

The Applicant has therefore tackled the problem of overcoming the abovementioned drawbacks.

According to an aspect of the present invention, a method of making a plastic wheel having a plurality of spokes is provided, the method comprising injecting melted plastic material into a mold. The melted plastic material is injected into the mold in regions corresponding to every spoke of the wheel to be formed.

The melted plastic material may preferably be injected into the mold in regions along said spokes spaced apart from a central axis of the wheel of a distance in a range from approximately 1/6 to approximately 2/3, more preferably 1/3 of a diameter of the wheel.

Reinforcing fibers are preferably added to the melted plastic material.

The plastic material may be selected in the group comprising polyamide or polypropylene and said reinforcing fibers may be selected from the group comprising short glass fibers, long glass fibers, natural fibers including hemp and flax, polycrystalline fibers, carbon, aluminium, boron, titanium, polyester or aramid fibers or filaments.

According to another aspect of the present invention, a molding equipment for actuating the above method is provided, wherein the molding equipment comprises a mold and a number of injection nozzles equal to the number of spokes of the wheel to be formed, each injection nozzle being located in a respective region of the mold corresponding to a respective one of the wheel spokes.

Preferably, each of said injection nozzles has a melt plastic outlet spaced apart from a central axis of the wheel to be formed of a distance in a range from approximately 1/6 to approximately 2/3, more preferably 1/3 of a diameter of the wheel.

The injection nozzles are preferably provided with shutter members operable for selectively opening/closing outlets of the injection nozzles.

The mold may comprise a punch for defining a central hole of a hub of the wheel to be formed, said punch having a cross-sectional profile such that the complementary cross-sectional profile of the hub central hole is preferably one among a sinusoidal profile, a star-shaped profile, a serrate profile, a polygonal profile.

The mold may comprise a punch for defining a central hole of a hub of the wheel to be formed, said punch having a cross-sectional profile such that the complementary cross-sectional profile of the hub central hole comprises a positioning member adapted to cooperate with a corresponding positioning member formed on a shaft or stem to which the wheel has to be coupled, preferably one among a flat region, at least one recess for receiving a key of a shaft or stem, at least one projection for engaging a recess in a shaft or stem.

Thanks to the present invention, and particularly thanks to the peculiar arrangement of the regions of injection of the melted plastic material into the mold, the reinforcing fibers that may be added to the melted plastic material for the purpose of reinforcing the wheel structure distribute in the wheel spokes essentially parallelly to each other and to the spokes' axes; this is beneficial, because the mechanical resistance of the wheel is increased.

A further aspect of the present invention, a plastic wheel comprising a central hub and a plurality of spokes is provided. In correspondence of each of said spokes a residue of injection of melted plastic material from a corresponding injection nozzle is present.

The central hub may have a hole with a cross-sectional profile selected from the group comprising a sinusoidal profile, a star-shaped profile, a serrate profile, a polygonal profile.

The plastic material may be selected in the group comprising polyamide or polypropylene, containing reinforcing fibers selected from the group comprising short glass fibers, long glass fibers, natural fibers including hemp and flax, polycrystalline fibers, carbon, aluminium, boron, titanium, polyester or aramid fibers or filaments. Said reinforcing glass fibers may be long glass fibers.

### Short description of the drawings

These and other features and advantages of the present invention will be made apparent by the following detailed description of some exemplary and non-limitative embodiments thereof, which should be read in conjunction with the attached drawings for better intelligibility. In the drawings:
**Figure 1** is an axonometric view of a molding equipment according to an embodiment of the present invention;
**Figures 2** and **3** are cross-sectional views of the molding equipment along lines **II-II** and **III-III** of **Figure 1****,** respectively;

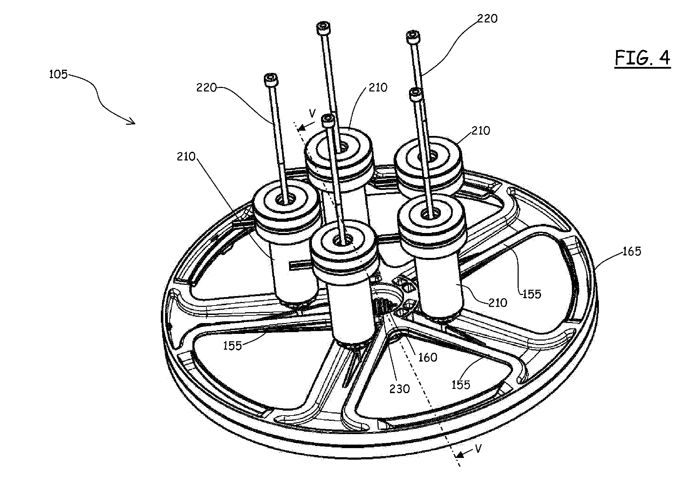

**Figure 4** depicts a plastic wheel that can be produced by injection molding using the molding equipment of **Figure 1****,** injection nozzles of the molding equipment being also shown;
**Figure 5** is a cross-sectional view along line **V-V** of **Figure 4****;**
**Figure 6** shows in enlarged scale a detail of the molding equipment of the preceding figures; and
**Figure 7** shows the plastic wheel of **Figure 4** in top-plan view.

### Detailed description of embodiments of the invention

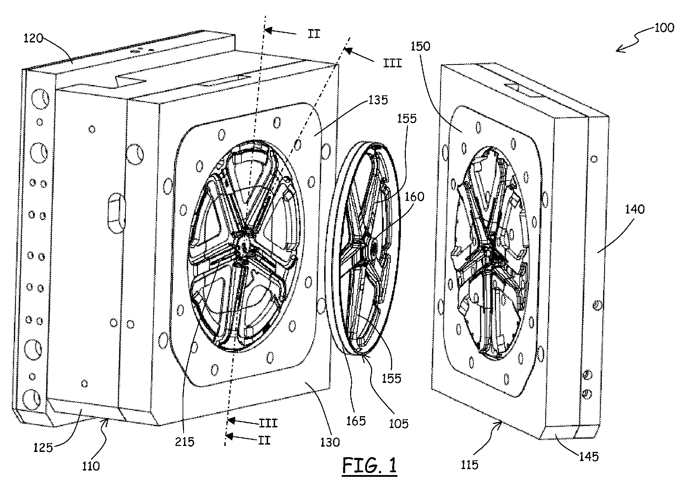

Making reference to the drawings, in **Figure 1** a molding equipment **100** according to an embodiment of the present invention is shown, for producing, by injection molding of a plastic material, a plastic wheel **105,** for example, but not limitatively, a pulley for, *e.g*., a belt transmission, for example for household appliances like laundry washing machines, washing/drying machines, dryers.

The molding equipment **100** comprises a mold assembly **110** and a counter-mold assembly **115.**

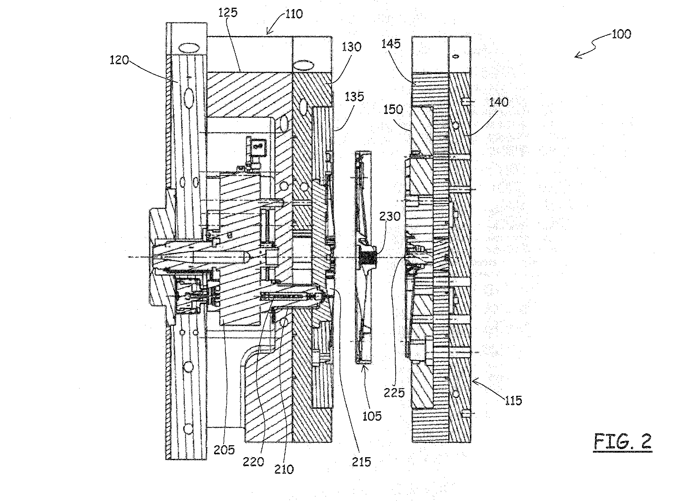

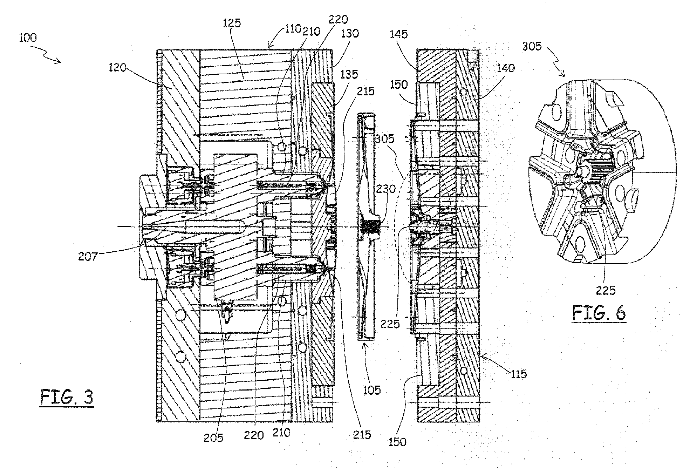

As better visible in the cross sections of **Figures 2** and **3****,** the mold assembly **110** comprises a support plate **120** advantageously supporting a mold carcass **125** which accommodates therein an injection chamber **205,** provided with internal channels (not shown in the drawings) for the flow of melted plastic material.

Preferably the channels depart from a central inlet **207,** through which the melted plastic material is inputted into the mold assembly **110,** particularly into the injection chamber **205,** and advantageously develop in a plane inside the injection chamber **205.** Advantageously the injection chamber **205** has associated therewith a heating system for heating the injection chamber **205** up to a suitable operating temperature (depending on the plastic material used). Preferably, frontally to the mold carcass **125** there is a die support plate **130,** supporting a die **135.**

The counter-mold assembly **115** comprises a support plate **140** advantageously supporting a counter-die support plate **145** which in turn supports a counter-die **150.**

The mold and counter-mold assemblies **110** and **115** are axially movable (in a manner *per-se* known) one relative to the other so that the counter-die **150** can be brought into abutment with the die **135** (for closing the mold) or displaced therefrom (for opening the mold).

The die **135** and the counter-die **150** are so shaped as to define, when brought one in abutment to the other (*i.e.,* when the mold is closed), a negative image of the wheel **105** to be produced.

The injection chamber **205** advantageously comprises injection nozzles **210** for the injection of melted plastic material into the space define internally to the die **135** and counter-die **150** (when the mold is closed). The melted plastic material is fed to the injection nozzles **210** preferably through the channels formed in the injection chamber **205.** According to an embodiment of the present invention, the injection chamber **205** comprises a number of injection nozzles **210** equal to the number of spokes **155** of the wheel **105** to be formed; in the example herein considered, the wheel **105** comprises an odd number of spokes **155,** particularly five spokes, however this is not to be construed as a limitation of the present invention, because the wheel **105** may have any number of spokes, even or odd. The spokes **155** radially extend from a wheel hub **160** joining thereto a peripheral crown **165** of the wheel **105.**

Each injection nozzle **210** is located in correspondence of a respective one of the radial channels **215** of the mold, particularly of the die **135,** which in operation are filled by the melted plastic material injected by the nozzles **210** for the formation of the spokes **155** of the wheel **105.** No injection nozzles are preferably provided in correspondence of the region of the mold corresponding to the hub **160** of the wheel **105.**

In a preferred embodiment of the invention, the injection nozzles **210** are arranged in such a way that their outlets are located along the respective radial mould channels at a distance from the center of the wheel **105,** *i.e.* from the axis of the hub **160,** ranging from approximately 1/6 to approximately 2/3, more preferably about 1/3 of the maximum diameter of the wheel **105.** Such a disposition has proved to be effective for a good distribution of the melted plastic material within all the mold.

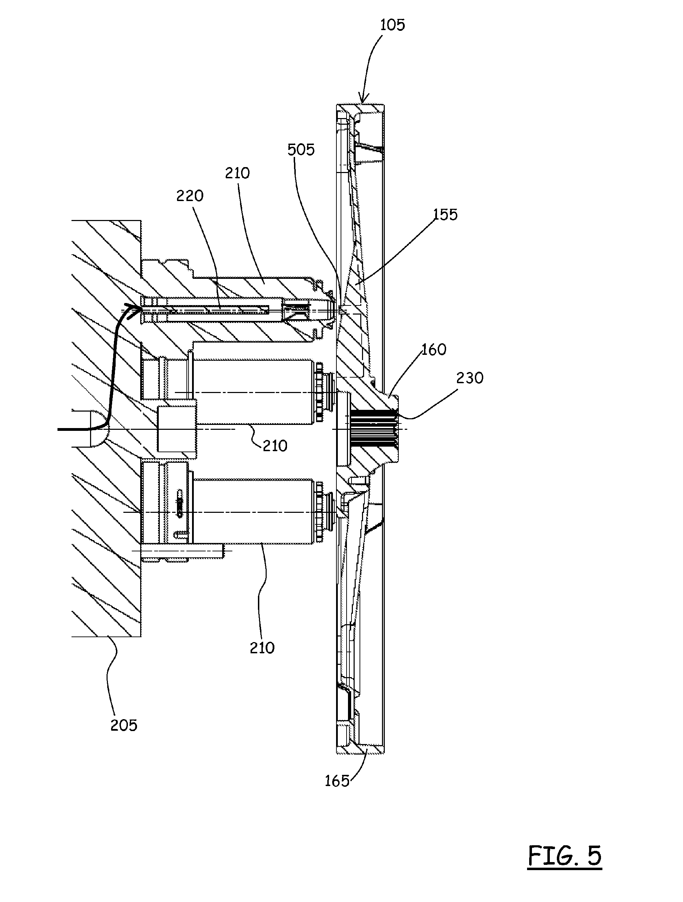

Advantageously, one or more, possibly all the injection nozzles **210** are provided with a valve or shutter (in the drawings, the actuating stems of the nozzle shutters are denoted **220**), for selectively opening/closing the nozzle outlets. This allows obtaining short mold plastic residuals when the wheel **105** is removed from the molding equipment; in particular, and advantageously, the mold plastic residuals (one of which is visible in **Figure 5** and is indicated with **505**) that remains in correspondence of the spokes **155** of the wheel **105** are plastic residual flashes or even, if the closure of the valve or shatter is very accurate, only small visible marks in correspondence of the injection region, and are in general so short that it is not necessary to perform any further operation for removing them from the wheel **105:** the wheel **105,** after the molding, is essentially ready to be used.

The counter-die **150** comprises a central punch **225** for defining the central hole **230** of the hub **160** of the wheel **105.** Preferably, but not necessarily, the punch **225** is cylindrical with a sinusoidal or serrate or polygonal profile in cross section, so that the central hole **230** of the hub **160** also has sinusoidal or serrate or star-shaped or polygonal cross-sectional profile; this allows a polygonal coupling between the wheel and, *e.g*., a counter-shaped shaft or stem intended to support the wheel. It is pointed out that this is made possible thanks to the fact that, according to an embodiment of the present invention, no points of injection of the melted plastic material into the mould are provided in correspondence of the center of the wheel.

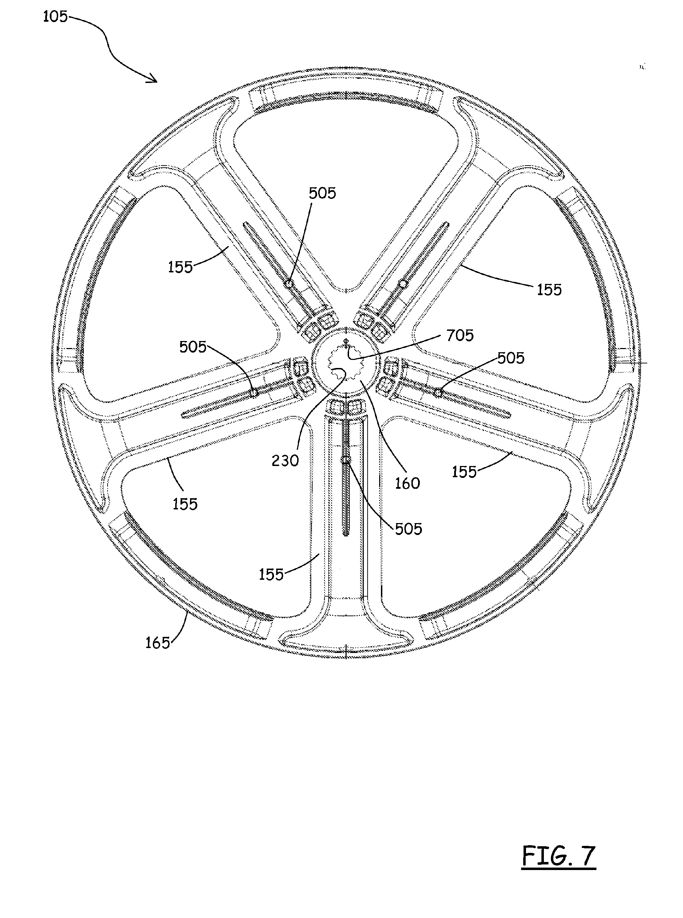

Preferably, the central punch **225** of the counter-die **150** is shaped so as to allows forming the hub central hole **230** with a positioning member, which may for example take the form of a flat region **705** of the central hole **230,** as shown in **Figure 7****,** or a recess, or a rib projecting towards the axis of the hole **230;** the positioning member is adapted to cooperate with a matching element provided on the shaft or stem, for example a flat shaft or stem portion, or a projection, which engages the hub position element for facilitating the insertion of the wheel **105** on the shaft or stem (ensuring the desired mutual angular orientation) and preventing any angular movement of the wheel **105** relative to the shaft or stem.

According to an embodiment of the present invention, the central part **305** of the counter-die **150,** shown in enlarged scale in **Figure 6****,** is separate and removable from the remaining of the counter-die **150,** so as to be replaceable by different parts, which are adapted to the use of different plastic materials (featuring different degrees of shrinkage when cooled down). This stratagem allows exploiting the same molding equipment for forming wheels having essentially the same shape also using different plastic materials. In this respect, it is pointed out that the central region of the wheel, corresponding to the hub, is the part of the wheel that is most subject to mechanical stresses during the use, so that it is important that the shirnkage of the plastic material used to form the wheel is as desired; the remaining of the wheel (spokes and crown) are less stressed, so that different degrees of shrinkage exhbited by different plastic materials is not a major concern.

Suitable plastic materials that can be used for the manufacturing of the wheel **105** are polyamide, or polypropylene. An amount of reinforcing fibers, for example glass fibers, in the range 30-70% in weight is preferably added to the thermoplastic material, for reinforcing the wheel. Melt polyamide at a temperature in the range 260 - 310 °C is injected into the mould through the injection nozzles, the mould being heated at a temperature in the range 60 - 105 °C; in the case of polypropylene, the temperature of the melt plastic material may be in the range 230 - 270 °C, for example 240 °C, and the mould may be heated at 40 - 70 °C, for example 50 °C. Other types of reinforcing fibers may be used in substitution or combinationn with glass fibers, for example natural fibers as hemp and flax, polycrystalline fibers, carbon, aluminium, boron, titanium, polyester or aramid fibers or filaments.

The arrangement of the injection nozzles in correspondence of each of the spokes of the wheel allows reducing the path of the stream of melt plastic inside the mould. This in the first place ensures that the produced wheel exhibits a high planarity, and in addition enables using long reinforcing fibers, like long glass fibers for reinforcing the plastic material, because the short path to be made by the melt plastic material ensures a good distribution of the fibers. For example, long glass fibers can be used when the thermoplastic resin is polypropylene, whereas short glass fibers may be preferred when the thermoplastic resin is polyamide. The reinforcing fibers result to be distributed in the wheel spokes essentially parallelly to each other and to the spokes' axes; this is beneficial, because the mechanical resistance of the wheel is increased.

In particular, the use of long glass fibers is advantageous over short glass fibers because high performance/price ratios can be achieved, such as reduced weight, good design and styling flexibility, with rapid clean processability of the moulding equipment.

Also, the short path to be made by the melt plastic material inside the mould allows reducing the injection pressure; this is advantageous because the injection equipment to be used is less expensive.

The present invention has here been described by means of some embodiments thereof. Those skilled in the art will be able to devise several modification and changes to the described embodiments, without departing from the protection scope defined in the appended claims.

## Claims

1. A method of making a plastic wheel **(105)** having a plurality of spokes **(155)**, the method comprising injecting melted plastic material into a mold, **characterized in that** the melted plastic material is injected into the mold in regions corresponding to every spoke of the wheel to be formed.

2. The method of claim 1, wherein the melted plastic material is injected into the mold in regions along said spokes spaced apart from a central axis of the wheel of a distance in a range from approximately 1/6 to approximately 2/3 of a diameter of the wheel.

3. The method of claim 2, wherein said distance is of approximately 1/3 the diameter of the wheel.

4. The method of any one of the preceding claims, comprising adding to the melted plastic material reinforcing fibers.

5. The method of claim 4, wherein the plastic material is selected in the group comprising polyamide or polypropylene and said reinforcing fibers are selected from the group comprising short glass fibers, long glass fibers, natural fibers including hemp and flax, polycrystalline fibers, carbon, aluminium, boron, titanium, polyester or aramid fibers or filaments.

6. A molding equipment for actuating the method of any one of the preceding claims, wherein the molding equipment comprises a mold and a number of injection nozzles **(210)** equal to the number of spokes of the wheel to be formed, each injection nozzle being located in a respective region of the mold corresponding to a respective one of the wheel spokes.

7. The molding equipment of claim 6, wherein each of said injection nozzles has a melt plastic outlet spaced apart from a central axis of the wheel to be formed of a distance in a range from approximately 1/6 to approximately 2/3 of a diameter of the wheel.

8. The molding equipment of claim 7, wherein said distance is of approximately 1/3 the diameter of the wheel.

9. The molding equipment of any one of claim 6 to 8, wherein said injection nozzles are provided with shutter members **(220)** operable for selectively opening/closing outlets of the injection nozzles.

10. The molding equipment of any one of claims 6 to 9, wherein the mold comprises a punch **(225)** for defining a central hole **(230)** of a hub **(160)** of the wheel to be formed, said punch having a cross-sectional profile such that the complementary cross-sectional profile of the hub central hole is one among a sinusoidal profile, a star-shaped profile, a serrate profile, a polygonal profile.

11. The molding equipment of any one of claims 6 to 9, wherein the mold comprises a punch **(225)** for defining a central hole **(230)** of a hub **(160)** of the wheel to be formed, said punch having a cross-sectional profile such that the complementary cross-sectional profile of the hub central hole comprises a positioning member **(705)** adapted to cooperating with a corresponding positioning element of a shaft or stem.

12. The molding equipment of claim 11, wherein the positioning member of the central hole comprises one among a flat region, at least one recess for receiving a key of a shaft or stem, at least one projection for engaging a recess in a shaft or stem

13. A plastic wheel **(105)** comprising a central hub **(160)** and a plurality of spokes **(155), characterized in that** in correspondence of each of said spokes a residue of injection **(505)** of melted plastic material from a corresponding injection nozzle **(210)** is present.

14. The plastic wheel of claim 13, wherein the central hub has a hole **(230)** with a cross-sectional profile selected from the group comprising a sinusoidal profile, a star-shaped profile, a serrate profile, a polygonal profile.

15. The plastic wheel of claim 13 or 14, wherein the plastic material is selected in the group comprising polyamide or polypropylene, containing reinforcing fibers selected from the group comprising short glass fibers, long glass fibers, natural fibers including hemp and flax, polycrystalline fibers, carbon, aluminium, boron, titanium, polyester or aramid fibers or filaments.
